# EUROPEAN PATENT SPECIFICATION

(11) **EP 2 082 910 B1**
(45) Date of publication and mention of the grant of the patent: **13.04.2011**
(21) Application number: 08172687.9
(22) Date of filing: 23.12.2008
(51) Int. Cl.: B60J 5/06, B60N 2/42, B60N 2/427, B60N 2/46

(54) **Armrest structure for vehicle seat**
Armlehnenstruktur für Fahrzeugsitz
Structure d'accoudoir pour siège de véhicule

(30) Priority: 23.01.2008 JP 2008012806
(43) Date of publication of application: 29.07.2009
(73) Proprietor: Mazda Motor Corporation, Aki-gun Hiroshima 730-8670 (JP)
(72) Inventor: Nakaya, Kouichi, Hiroshima 730-8670 (JP); Tochigi, Daisaku, Hiroshima 730-8670 (JP)
(74) Representative: Thoma, Michael

(56) References cited:
- WO-A-2006/120527
- DE-A1- 19 734 334
- JP-A- 7 194 462
- JP-A- 2006 056 424
- US-A- 5 484 187

## Description

### BACKGROUND

A technique disclosed in the present specification relates to an armrest structure for a vehicle seat in which an armrest is mounted on the outboard side of a seat back.

It is general to provide an armrest at a side door in a conventional armrest structure for a vehicle seat. In a side door of a vehicle disclosed in, for example, Japanese Unexamined Patent Application Publication 2006-56424, a support shaft serving as a swinging support axis is provide at the lower side part of a support member (the armrest) to allow the armrest to be capable of swinging and shifting about the support shaft as the support axis.

Furthermore, WO 2006/120527 shows an armrest structure with the armrest being mounted on the outboard side of a seat back. The armrest frame is provided with a vertical groove which forms a weak portion so that said armrest frame is deformed at said groove and the armrest may bend toward the inside, when another vehicles collides with the respective side of the vehicle and an impact load due to a deformation of the vehicle's door pushes against the armrest.

### SUMMARY OF THE DISCLOSURE

In the conventional armrest structure for a vehicle seat, however, the armrest is provided at the side door to necessitate operation for accommodating the armrest in operating to open/close the side door, which is laborious. Automation of this operation makes the structure of the side door more complicated than a case with an armrest merely provided at a resin-made trim panel and increases its weight to make the opening/closing operation difficult.

While on the other hand, when the armrest is provided at a seat without narrowing the width of the seat, a hand or the like may be caught between the side door and the armrest in opening/closing the side door.

The present invention has been made in view of the foregoing and has its object of securely preventing a hand and the like from being caught by an armrest in opening/closing a door in a simple structure with no narrowing of the width of a seat involved.

To attain the above object, an armrest in accordance with claim 1 is provided. Further features of the invention are defined in the dependent claims.

Specifically, an armrest structure includes: a mounting portion provided on an outboard side in a car width direction of a seat back; an armrest mounted at the mounting portion; and a door trim panel provided outboard of the seat back, wherein the armrest is arranged close to the door trim panel and is movable inboard upon receipt of an inboard load.

With the above arrangement, the armrest moves inboard upon receipt of an inboard load caused when a hand or the like intervening between the door trim panel and the armrest pushes the armrest in opening/closing the door. Hence, the hand or the like is not caught even though the width of the seat is not reduced.

The door trim panel may be provided at a sliding door and is located close to an outboard surface of the armrest when the sliding door is closed.

The above arrangement eliminates the need to form the armrest at the door trim panel of the sliding door to lead to reduction in the amount of outboard ejection in opening of the sliding door and to eliminate the need to form in the door trim panel a large armrest releasing clearance for preventing a hand and the like from being caught. Hence, the width of the seat is need not to be narrowed to increase the degree of freedom of design.

The armrest includes a swing mechanism capable of swinging inboard about the mounting portion as a center upon receipt of the inboard load, and the swing mechanism includes a biasing member for always pushing back the armrest outboard.

With the above arrangement, when no inboard load is applied, the armrest returns self-operatively to the original position by the operation of the biasing member, thereby eliminating the need to return the armrest manually.

The swing mechanism may be mounted at the seat back, and the armrest is provided at the swing mechanism.

In the above arrangement, it is unnecessary to provide the swing mechanism at the armrest to lead to reduction in size and weight of the armrest, thereby facilitating its swinging.

The armrest may be mounted at the swing mechanism so as to be capable of turning vertically relative to the swing mechanism.

In the above arrangement, vertical turning of the armrest does not accompany turning of the swing mechanism. Hence, the armrest can swing smoothly when a load in the horizontal direction is applied regardless of the turning position of the armrest.

The swing mechanism may include: a base plate mounted at a seat back frame; and a swing plate pivotally supported by the base plate so as to be capable of swinging inboard relative to the base plate, wherein the armrest is mounted at the swing plate so as to be capable of turning vertically relative to the base plate.

With the above arrangement, the swing plate swings relative to the base plate mounted at the seat back frame to cause the armrest to swing relative to the seat back frame. Vertical turning of the armrest means mere turning of the arrest relative to the swing plate and does not cause the swing mechanism to turn. Hence, the armrest is prevented from unintentional inboard swinging at vertical turning of itself and can swing smoothly upon receipt of a load in the horizontal direction regardless of the turning position of the armrest.

The armrest may include a cushion while the seat back may include another cushion, wherein the armrest is mounted at the mounting potion so as to be in contact at an inboard surface thereof with an outboard surface of the seat back, and the cushion of the armrest and the cushion of the seat back are in contact with each other before the mounting portion.

With the above arrangement, the mounting portion to which the armrest and the seat back are mounted is not covered with any cushions to reduced the width of the seat as a whole and to facilitate swinging of the armrest by deforming the cushion of the armrest and the cushion of the seat back.

### BRIEF DESCRIPTION OF THE DRAWINGS

FIG. **1** is a perspective view showing the interior of a vehicle having an armrest structure for a vehicle seat in accordance with an embodiment.
FIG. **2** is a perspective view showing a right seat and a right side door.
FIG. **3** is a sectional view taken along the line III-III in FIG. **2****.**
FIG. **4** is a sectional view taken along the line IV-IV in FIG. **3****.**
FIG. **5** is a perspective view of a seat from which a seat back cushion is taken off.
FIG. **6** is an enlarged exploded view of a swing mechanism.
FIG. **7** is a perspective view of an armrest frame.
FIG. **8** is a sectional view taken along the line VIII-VIII in FIG. **5****.**

### DETAILED DESCRIPTION

An embodiment of the present invention will be described below with reference to the accompanying drawings.

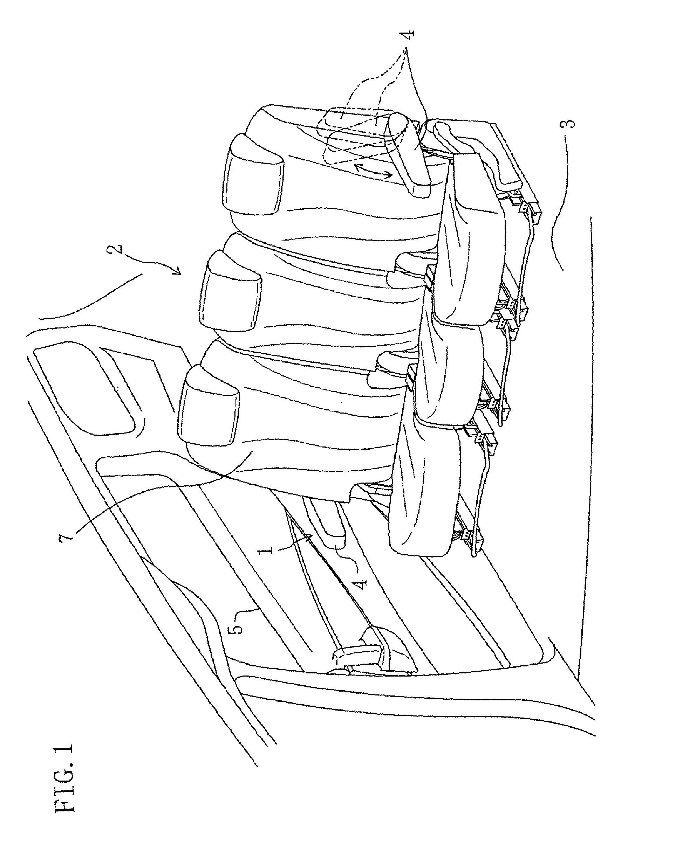

FIG. **1** shows the interior of a passenger compartment of a vehicle having an armrest structure **1** for a vehicle seat **2** in the present embodiment, wherein the vehicle seat **2** is composed of three rear seats connected in series. The three rear seats are independent of each other and are capable of sliding back and forth relative to a floor plate **3,** and an armrest **4** is provided on each outboard side in the car width direction of the vehicle seat **2.**

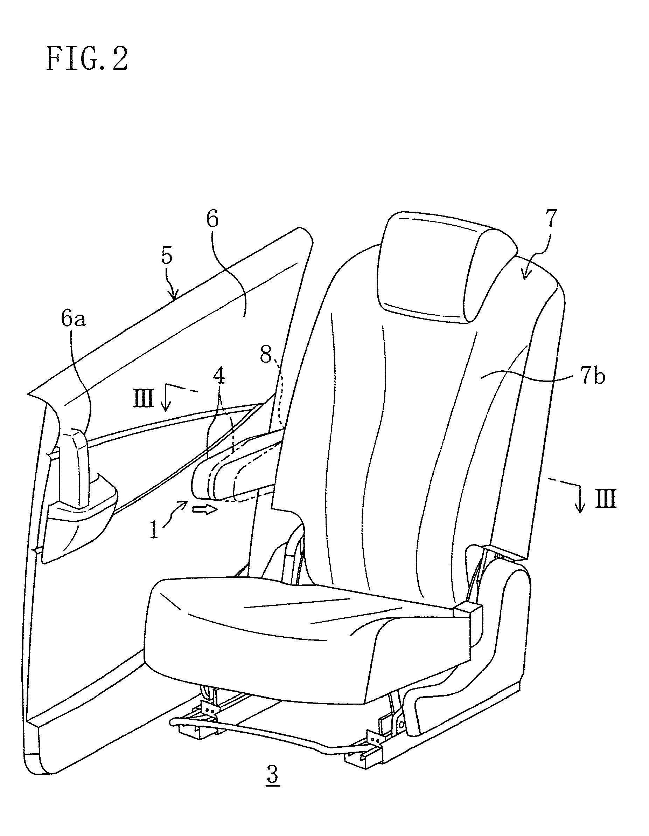

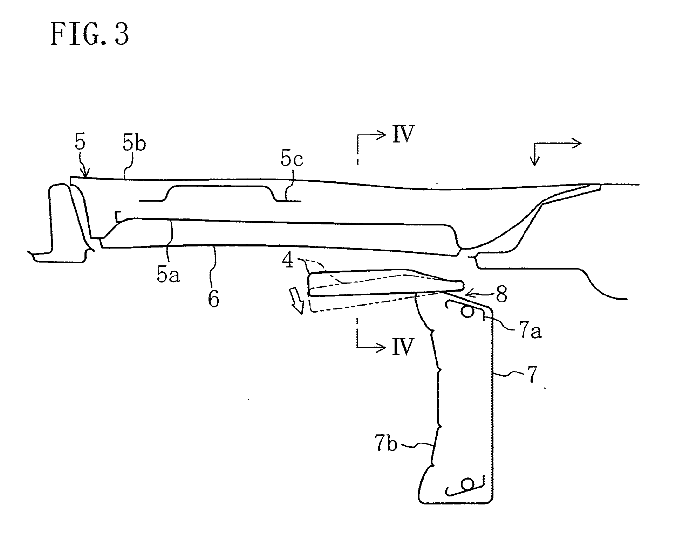

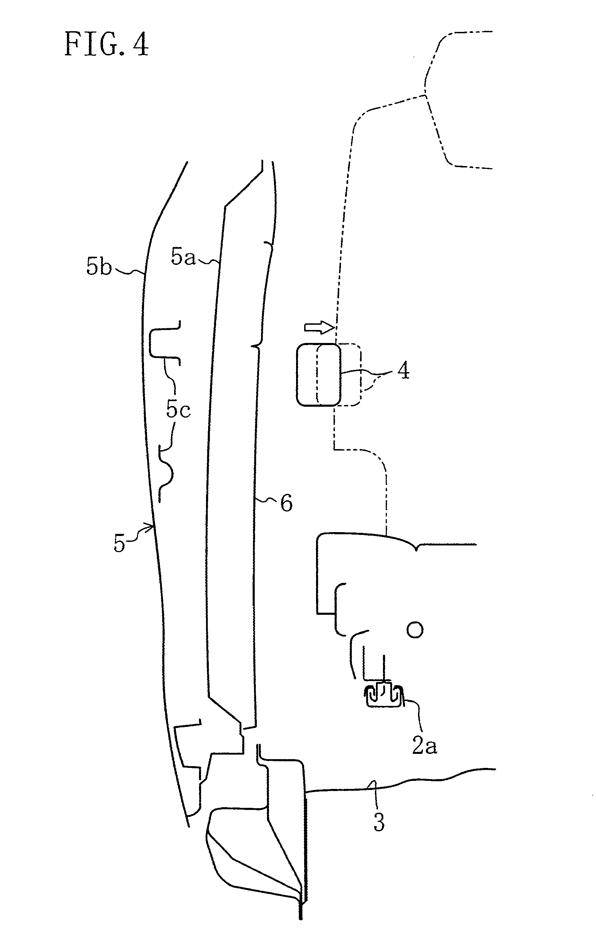

FIG. **2** to FIG. **4** show in enlarged scales one of the rear seats as the right side part of the vehicle seat **2.** On each outboard side of the vehicle seat **2,** a sliding door **5** is arranged, which includes an inner panel **5a,** an outer panel **5b,** and a door reinforcement **5c.** The inboard surface of the inner panel **5a** is covered with a door trim panel **6** made of resin or the like. The sliding door **5** is opened by sliding it once outward and sliding it rearward then. When the sliding door **5** is closed, the door trim panel **6** is located close to the outboard surface of the armrest **4.** Since the armrest **4** is unnecessary to be provided at the door trim panel **6,** the door trim panel **6** has a simple structure including less protrusions other than a sliding door handle portion **6a.** Each rear seat includes therebelow a sliding mechanism **2a** fixed to the floor plate **3** to be allowed to slide back and forth.

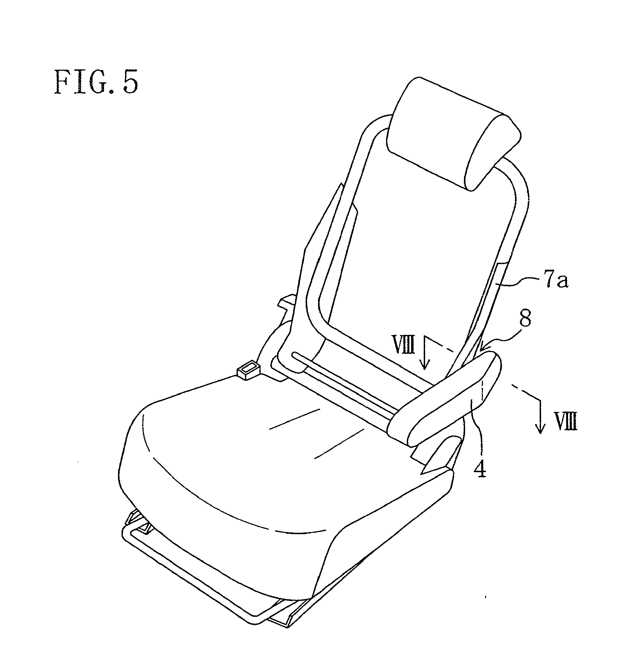

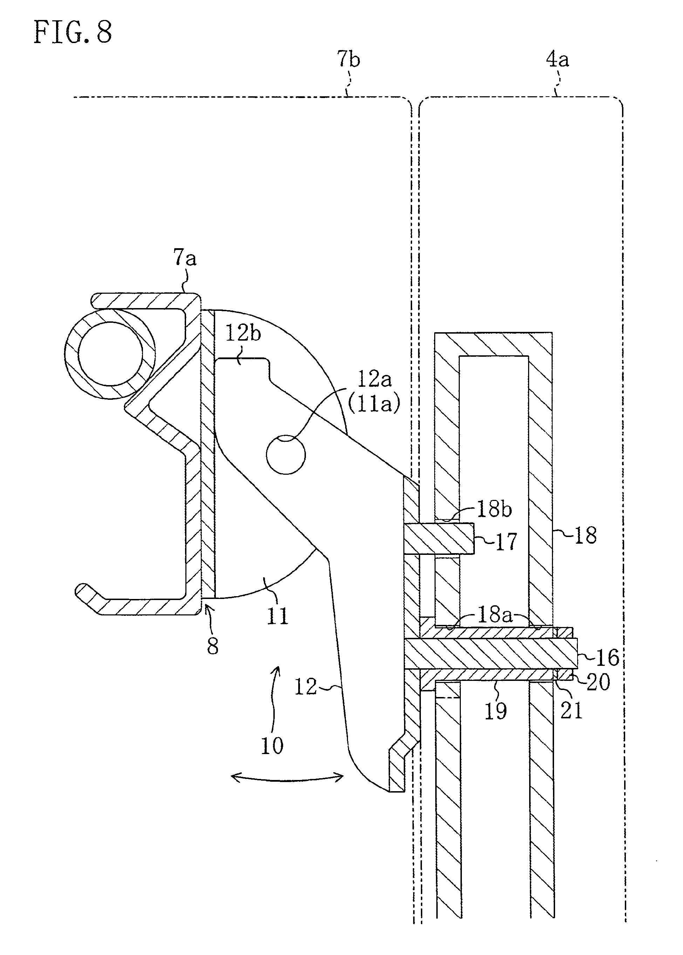

The armrest **4** is capable of moving inboard upon receipt of an inboard load, which is a significant feature of the present embodiment. Specifically, as shown in FIG. **5****,** which shows the left side part of the vehicle seat **2,** a seat back **7** of a left rear seat of the vehicle seat **2** is so composed that a seat back frame **7a** as a framework formed of a cylindrical pipe and a steel plate is covered with a seat cushion **7b.** The armrest **4** is mounted at the steel plate on the outboard side in the car width direction of the seat back frame **7a.** As shown in FIG. **8****,** at a mounting portion **8** of the seat back **7,** a swing mechanism **10** is provided which is capable of swinging inboard about the mounting portion **8** as a center upon receipt of an inboard load.

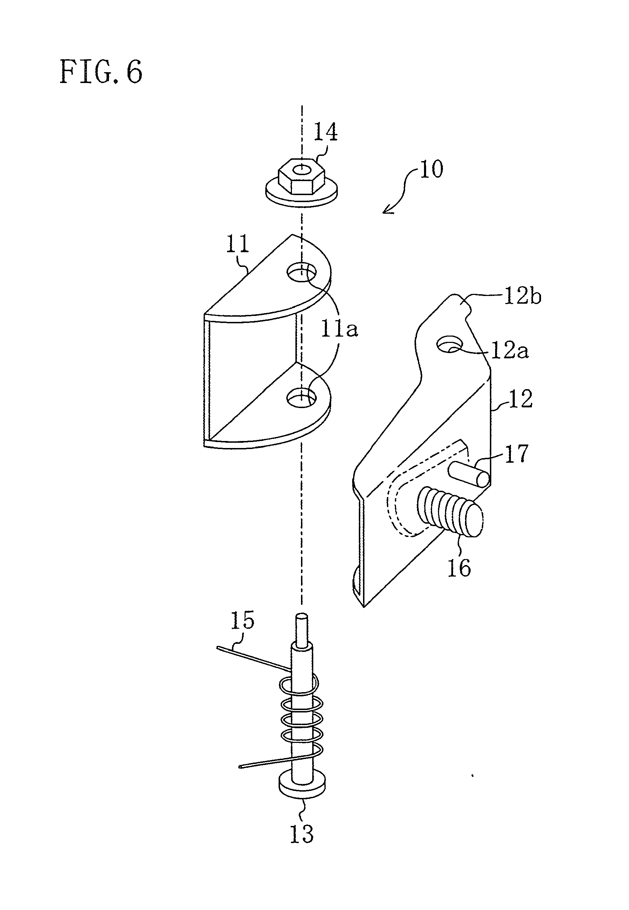

As shown in FIG. **6****,** the swing mechanism **10** includes a base plate **11** mounted at the seat back frame **7a.** The base plate **11** is bent outboard at the upper and lower parts thereof to form bent portions, and a through hole **11a** is formed in each of these bent portions. A swing plate **12** is supported by the base plate **11** pivotally to be capable of swinging inboard (horizontally). The swing plate **12** is bent inboard at upper and lower parts thereof to form bent portions, and a through hole **12a** is formed in each of these bent portions. A swing pin **13** is fitted from below in each of the through holes **11a** and the through holes **12a** with them aligned, and a nut **14** is fastened from above. A torsional coil spring **15** as a biasing member is fitted around the swing pin **13.** Though a detailed mounting structure of the torsional coil spring **15** is not shown, the torsional coil spring **15** includes a catch formed at one end thereof and a catch formed at the other end thereof. In a state that the torsional coil spring **15** is wound up from an original natural state (in a state that the bias force in a direction in which the winding is released applied), the catch at the one end is engaged with a hole, a notch, or the like formed in the base plate **11** while the catch at the other end is engaged with a hole, a notch, or the like formed in the swing plate **12.** The torsional coil spring **15** always pushes back the armrest **4** outboard. As shown in FIG. **8****,** a stopper **12b** is formed in the rear end part of the swing plate **12.** The stopper **12b** comes in contact with the outboard surface of the base plate **11,** thereby restricting the swinging range of the swing plate **12.**

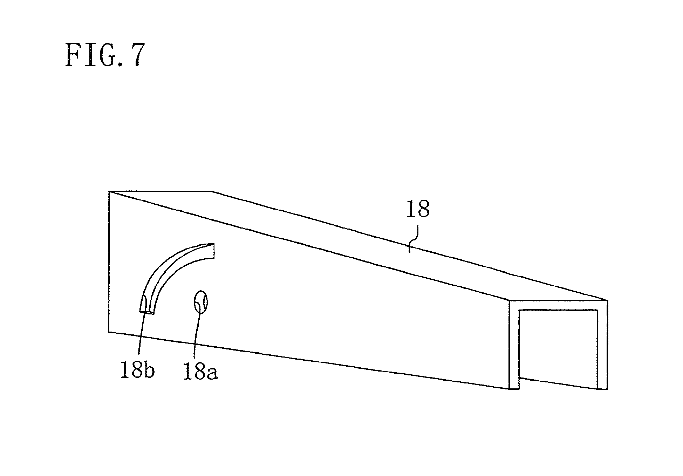

From the outboard surface of the swing plate **12,** an armrest supporting shaft **16** and a turning range restricting pin **17** are protruded. As shown in FIG. **7** and FIG. **8****,** an armrest frame **18** in a angular C-shape in section of which the lower part is opened is mounted at the swing plate **12.** A support shaft insertion hole **18a** as a through hole is formed in each side plate of the armrest frame **18** so as to allow the armrest supporting shaft **16** to pass therethrough. An arc-shaped pin hole **18b** is formed in the inboard side plate so as to receive the turning range restricting pin **17.** The armrest supporting shaft **16** is inserted in each supporting shaft insertion hole **18a** with a spacer **19** intervening around the armrest supporting shaft **16** while the turning range restricting pin **17** is inserted in the pin hole **18b,** and a tip end screw part of the armrest support shaft **16** is fastened with a nut **20** and a spring washer **21.** Whereby, the armrest **4** is mounted at the swing plate **12** to be capable of vertically turning relative to the swing plate **12.** Vertical turning of the armrest **4** means only turning thereof relative to the swing plate **12** and causes no turning of the swing mechanism **10** itself. This prevents unintentional inboard swinging of the armrest **4** in vertical turning of the armrest **4.**

In the armrest **4,** a part of the armrest frame **18** other than the vicinity of the mounting portion **8** is covered with an arm cushion **4a.** The armrest **4** in this state is mounted at the mounting portion **8** so as to be in contact at the inboard surface thereof to the outboard surface of the seat back **7,** so that the seat cushion **7b** and the arm cushion **4a** are in contact with each other before the mounting portion **8.** The seat cushion **7b** and the arm cushion **4a** are thus provided at a part of the seat back **7** except the mounting portion **8** to which the armrest **4** and the seat back **7** are mounted, thereby reducing the total width of the seat **2.**

Provision of the armrest **4** at the seat back **7** means that it is unnecessary to form the armrest **4** at the door trim panel **6** of the sliding door **5,** thereby reducing the amount of outboard ejection in opening the sliding door **5** and eliminating the need to form a large armrest releasing clearance in the door trim panel **6.** Hence, the degree of freedom in design increases.

### - Operation -

An operation of the armrest structure **1** for a vehicle seat in accordance with the present embodiment will be described next.

There are two cases in closing the sliding door **5,** namely: the case where a passenger sitting on the seat **2** closes the sliding door **5;** and the case where a person outside the vehicle closes the sliding door **5.** Particularly, in the latter case, a passenger sitting on the seat **2** may put on his/her arm on the armrest **4.** When the sliding door **5** is closed in such a state, the door trim panel **6** may push the passenger's hand if the hand is put between the door trim panel **6** and the armrest **4.** If so, the armrest **4** is pushed, namely, receives an inboard load, thereby causing the swing plate **12** to swing inboard relative to the base plate **11** mounted at the seat back frame **7a.** This causes the armrest frame **18** to swing in the direction indicated by open arrows in the drawings relative to the seat back frame **7a** to deform the seat cushion **7b** and the arm cushion **4a.** Thus, the armrest **4** swings inboard in this way to prevent the passenger's hand from being caught by the sliding door **5.**

The armrest **4** is turned vertically according to the posture of a passenger. Such vertical turning of the armrest **4,** however, causes no turning of the swing mechanism **10.** Therefore, the armrest **4** can swing smoothly upon receipt of a load in the horizontal direction regardless of the turning position of the armrest **4.** The swing mechanism **10** is provided at the seat back **7** rather than at the armrest **4,** and the armrest **4** is mounted at the swing mechanism **10.** This leads to compaction and weight reduction of the armrest **4,** thereby facilitating swinging and vertical turning of the armrest **4.**

When an inboard load ceases, namely, when a passenger removes his/her hand from the armrest **4,** or so, the torsional coil spring **15** returns the armrest **4** self-operatively to the original position.

### - Effects of Embodiment -

In the armrest structure **1** for the vehicle seat **2** of the present embodiment, the armrest **4** mounted at the mounting portion **8** on the outboard side of the seat back **7** is arranged close to the door trim panel **6** and is allowed to move inboard upon receipt of an inboard load. Hence, a hand and the like is securely prevented from being caught by the armrest **4** in opening/closing the door in such a simple structure with no narrowing of the width of the seat **2** involved.

### (Other Embodiments)

The above embodiment may employ any of the following structures.

The armrest **4** is provided at each side of the seat **2** of the three rear seats connected in series in the above embodiment but may be provided at each side of a bench seat. Wherein, in a case of the three seats connected in series which can slide independently of each other, the total width thereof is great, and therefore, the present invention can exhibit the effects prominently. The armrest **4** may be provided on the outboard side of the front passenger seat.

## Claims

1. An armrest structure (**1**) for a vehicle seat (**2**) in which an armrest (**4**) is mounted at a mounting portion (**8**) on the outboard side of a seat back (**7**), wherein the armrest (**4**) is arranged close to a door trim panel (**6**) located outboard in the car width direction of the seat back (**7**) and is capable of moving inboard upon receipt of an inboard load, wherein the armrest (4) includes a swing mechanism (10) capable of swinging inboard about the mounting portion (8) as a center upon receipt of the inboard load,
**characterized in that**
the swing mechanism (10) includes a biasing member (15) for always pushing back the armrest (4) outboard.

2. The armrest structure (**1**) of claim 1,
wherein the door trim panel (**6**) is provided at a sliding door (**5**) and is located close to the outboard surface of the armrest (**4**) when the sliding door (**5**) is closed.

3. The armrest structure (**1**) of claim 1,
wherein the swing mechanism (**10**) is mounted at the seat back (**7**), and the armrest (**4**) is provided at the swing mechanism (**10**).

4. The armrest structure (**1**) of claim 3,
wherein the armrest (**4**) is mounted at the swing mechanism (**10**) so as to be capable of turning vertically relative to the swing mechanism (**10**).

5. The armrest structure (**1**) of any one of claims 1 to 4,
wherein the swing mechanism (**10**) includes:
a base plate (**11**) mounted at a seat back frame (**7a**); and
a swing plate (**12**) pivotally supported by the base plate (**11**) so as to be capable of swinging inboard relative to the base plate (**11**), and
the armrest (**4**) is mounted at the swing plate (**12**) so as to be capable of turning vertically relative to the swing plate (**12**)**.**

6. The armrest structure (**1**) of any one of claims 1 to 5,
wherein the armrest (**4**) includes a cushion (**4a**),
the seat back (**7**) includes another cushion (**7b**),
the armrest (**4**) is mounted at the mounting potion (**8**) so as to be in contact at an inboard surface thereof with an outboard surface of the seat back (**7**), and
the cushion **(4a)** of the armrest (**4**) and the cushion (**7b**) of the seat back (**7**) are in contact with each other before the mounting portion (**8**).

## Patentansprüche

1. Armlehnenstruktur (1) für einen Fahrzeugsitz (2), bei der eine Armlehne (4) an einem Befestigungsabschnitt (8) auf der Außenseite einer Sitzlehne (7) angebracht ist, wobei die Armlehne (4) nahe bei einer in Fahrzeugbreitenrichtung der Sitzlehne (7) auf der Außenseite befindlichen Türverkleidung (6) angeordnet ist und sich unter der Einwirkung einer einwärts gerichteten Kraft nach innen bewegen kann, wobei die Armlehne (4) einen Schwenkmechanismus (10) aufweist, der unter der Einwirkung der einwärts gerichteten Kraft um den Befestigungsabschnitt (8) als Mittelpunkt nach innen schwenken kann,
**dadurch gekennzeichnet, dass**
der Schwenkmechanismus (10) ein Vorspannelement (15) aufweist, um die Armlehne (4) immer nach außen zurückzuschieben.

2. Armlehnenstruktur (1) nach Anspruch 1,
wobei die Türverkleidung (6) an einer Schiebetür (5) vorgesehen ist und sich nahe bei der Außenseite der Armlehne (4) befindet, wenn die Schiebetür (5) geschlossen ist.

3. Armlehnenstruktur (1) nach Anspruch 1,
wobei der Schwenkmechanismus (10) an der Sitzlehne (7) angebracht ist und die Armlehne (4) an dem Schwenkmechanismus (10) vorgesehen ist.

4. Armlehnenstruktur (1) nach Anspruch 3,
wobei die Armlehne (4) an dem Schwenkmechanismus (10) angebracht ist, um sich vertikal relativ zu dem Schwenkmechanismus (10) drehen zu können.

5. Armlehnenstruktur (1) nach einem der Ansprüche 1 bis 4,
wobei der Schwenkmechanismus (10) Folgendes aufweist:
eine Grundplatte (11), die an einem Sitzlehnenrahmen (7a) angebracht ist; und
eine Schwenkplatte (12), die auf der Grundplatte (11) schwenkbar gelagert ist, um relativ zu der Grundplatte (11) einwärts schwenken zu können, und
wobei die Armlehne (4) an der Schwenkplatte (12) angebracht ist, um sich relativ zu der Schwenkplatte (12) vertikal drehen zu können.

6. Armlehnenstruktur (1) nach einem der Ansprüche 1 bis 5,
wobei die Armlehne (4) ein Polster (4a) aufweist,
die Sitzlehne (7) ein weiteres Polster (7b) aufweist,
die Armlehne (4) so an dem Befestigungsabschnitt (8) angebracht ist, dass sie auf ihrer Innenseite mit einer Außenseite der Sitzlehne (7) in Kontakt steht, und
das Polster (4a) der Armlehne (4) und das Polster (7b) der Sitzlehne (7) vor dem Befestigungsabschnitt (8) miteinander in Kontakt stehen.

## Revendications

1. Structure d'accoudoir (1) destinée à un siège de véhicule (2) dans lequel un accoudoir (4) est monté sur une partie de montage (8) sur le côté extérieur d'un dossier de siège (7), dans lequel l'accoudoir (4) est disposé près d'une tôle de coffrage de porte (6) située à l'extérieur du dossier de siège (7) dans le sens de la largeur de la voiture et est apte à se déplacer vers l'intérieur jusqu'à réception d'une charge intérieure, dans lequel l'accoudoir (4) comprend un mécanisme pivotant (10) capable de pivoter vers l'intérieur autour de la partie de montage (8) en tant que centre jusqu'à réception de la charge intérieure,
**caractérisée en ce que**
le mécanisme pivotant (10) comprend un élément en biais (15) afin de toujours repousser l'accoudoir (4) vers l'extérieur.

2. Structure d'accoudoir (1) selon la revendication 1,
dans laquelle la tôle de coffrage de porte (6) est présente sur une porte coulissante (5) et est située près de la surface extérieure de l'accoudoir (4) lorsque la porte coulissante (5) est fermée.

3. Structure d'accoudoir (1) selon la revendication 1,
dans laquelle le mécanisme pivotant (10) est monté sur le dossier de siège (7), et l'accoudoir (4) est présent sur le mécanisme pivotant (10).

4. Structure d'accoudoir (1) selon la revendication 3,
dans laquelle l'accoudoir (4) est monté sur le mécanisme pivotant (10) afin d'être apte à tourner verticalement par rapport au mécanisme pivotant (10).

5. Structure d'accoudoir (1) selon une quelconque des revendications 1 à 4, dans laquelle le mécanisme pivotant (10) comprend :
une plaque de base (11) montée sur un cadre de dossier de siège (7a) ; et
une plaque oscillante (12) supportée de manière pivotante par la plaque de base (11) afin d'être apte à pivoter vers l'intérieur par rapport à la plaque de base (11), et
l'accoudoir (4) est monté sur la plaque oscillante (12) afin d'être apte à tourner verticalement par rapport à la plaque oscillante (12).

6. Structure d'accoudoir (1) selon une quelconque des revendications 1 à 5, dans laquelle l'accoudoir (4) comprend un coussin (4a),
le dossier de siège (7) comprend un autre coussin (7b),
l'accoudoir (4) est monté sur la partie de montage (8) afin d'être en contact sur une surface intérieure de celle-ci avec une surface extérieure du dossier de siège (7), et
le coussin (4a) de l'accoudoir (4) et le coussin (7b) du dossier de siège (7) sont en contact l'un avec l'autre avant la partie de montage (8).
